# EUROPÄISCHE PATENTSCHRIFT

(11) **EP 0 337 407 B1**
(45) Veröffentlichungstag und Bekanntmachung des Hinweises auf die Patenterteilung: **20.10.1993**
(21) Anmeldenummer: 89106435.4
(22) Anmeldetag: 11.04.1989
(51) Int. Cl.: H02B 1/00, H02B 7/00

(54) **Poller**
Bollard
Bollard

(30) Priorität: 15.04.1988 DE 3812497
(43) Veröffentlichungstag der Anmeldung: 18.10.1989
(73) Patentinhaber: HELLUX LEUCHTEN GMBH, D-30880 Laatzen (DE)
(72) Erfinder: Steck, Bernhard, Dr.-Ing., D-3014 Laatzen 5 (DE); Scharnofske, Hans, Dipl.-Ing., D-3000 Hannover 1 (DE)
(74) Vertreter: Junius, Walther, Dr.

(56) Entgegenhaltungen:
- FR-A- 2 022 246
- US-A- 3 341 268
- US-A- 3 596 141

## Beschreibung

Die Erfindung betrifft die Verwendung eines Pollers.

Poller werden in zunehmendem Maße an innerstädtischen Plätzen und Straßen eingebaut, um einerseits Automobile am Befahren von Fußweg- und Rasenflächen zu hindern, andererseits, wenn zwischen ihnen Ketten ausgespannt sind, um Fußgänger daran zu hindern, Straßen und Plätze an bestimmten Stellen zu überqueren. Ihren Einsatz finden solche Poller insbesondere zum Eingrenzen und Absperren von gepflasterten Flächen, wie Marktplätzen. Diese Flächen werden zu bestimmten Zeiten für die Veranstaltung von Märkten, Straßenfesten und dergleichen benutzt. Zu diesen Anlässen werden Buden, Verkaufsstände, Karussels usw. auf diesen Flächen aufgebaut, die mit elektrischer Energie versorgt werden müssen.

Die Versorgung dieser Buden, Verkaufsstände, Karussels usw. mit elektrischer Energie erfolgt zumeist aus Verteilerschränken, die für jede dieser Veranstaltungen aufgebaut werden und nach Beendigung der Veranstaltung wieder entfernt werden müssen, weil die Aufstellung üblicher fest installierter quaderförmiger Verteilerschränke schlecht in das architektonische Gesamtbild einer solchen ruhenden Verkehrsfläche hineinpaßt, wenn diese nicht für Märkte, Straßenfeste und dergleichen benutzt wird.

Fest eingebaute Verteilerschränke, wie sie beispielsweise durch die FR-A-2022246 oder die US-A-3341268 bekannt geworden sind, müssen, wenn sie auf Märkten oder anderen öffentlichen Plätzen fest aufgestellt werden, in einer z.B. durch eine Hauswand oder Mauerecke geschützten Stelle angeordnet werden, weil derartige Verteilerschränke aus dünnem Blech oder Kunststoff hergestellt sind und allzu leicht durch Berührung mit Fahrzeugen beschädigt oder gar zerstört werden können. Sie werden aber in solche geschützten Ecken auch wegen ihres wenig dekorativen Aussehens von den Städtebauern und Architekten verbannt. In solchen geschützten Ecken aufgestellt, sind sie aber meist weit entfernt von dem Ort, an dem elektrische Energie für Märkte, Straßenfeste oder dergleichen benötigt wird.

Durch die US-A-3596141 ist es bekannt geworden, elektrische Leistungsmeßgeräte auf einem zylindrischen Sockel anzuordnen, der mit einer kegelförmigen Haube oder dem Fuß einer klappbar angeordneten Lampe abgedeckt ist. Derartige Anordnungen von elektrischen Leistungsmessern außerhalb des mit Energie zu versorgenden Hauses werden im Bereich des das Grundstück abtrennenden Zaunes oder am Hauseingang installiert, damit der elektrische Leistungsmesser nicht durch äußere Einflüsse beschädigt werden kann.

Aber es ist nicht nur der mit nicht unerheblichen Kosten verbundene Auf- und Abbau der beweglichen Verteilerschränke auf öffentlichen Plätzen, der den zuständigen Verwaltungen und Versorgungsunternehmen Sorge bereitet, es ist auch die Verlegung von Versorgungskabeln bis zu diesen Verteilerschränken, die Probleme mit sich bringt. Die Verlegung der Kabel auf den von dicht gedrängten Menschenmassen begangenen öffentlichen Plätzen und Straßen bereitet die Schwierigkeit einer stolperfreien Verlegung, die oftmals nicht erreichbar ist.

Die Erfindung beseitigt diese Nachteile und Probleme. Es ist die Aufgabe der Erfindung, mit einfachen Mitteln fest an solchen Plätzen aufgebaute Gegenstände zu benutzen, um in ihnen Verteileranlagen für elektrische Energie ortsfest so unterzubringen, daß sie das architektonische Gesamtbild nicht mehr stören.

Der Erfindung liegt der Gedanke zugrunde, an Straßen und Plätzen stehende Poller, die dort dem Zwecke einer Abgrenzung und/oder Absperrung dienen, noch einem zweiten Verwendungszweck zuzuführen, sie nämlich als elektrische Verteilerschränke zu benutzen.

Die Erfindung besteht in der Verwendung eines Pollers als Schalt- und Verteilerschrank für die elektrische Energieversorgung, wobei der Poller aus einem hohlen Rohr besteht, welches mindestens an seinem einen Ende verschlossen ist, wobei die Wandung des Rohres mit mindestens einer Öffnung versehen ist, die durch eine Klappe oder Tür verschließbar ist, wobei im Inneren des Rohres mindestens eine Montageplatte angeordnet ist, wobei der Poller mindestens eine Öffnung für die Einführung eines Kabels aufweist, und wobei auf der Montageplatte Elektroinstallationsbauteile montiert sind.

Dieser der Abgrenzung und/oder Absperrung dienende Poller erhält somit einen zweiten Verwendungszweck, er wird Verteilerschrank. Dabei steht dieser als Verteilungsschrank dienende Poller für die Versorgung von Buden, Verkaufsständen, Karussels und dergleichen besonders günstig, weil die Buden und Verkaufsstände mit ihrer Rückseite meist unmittelbar neben diesen Pollern aufgebaut werden. Denn da die Poller eine Abgrenzungsfunktion für den Verkehr darstellen sollen, werden die zwischen den Buden und Verkaufsständen eines Marktes belassenen Wege für das Publikum nicht neben diese Poller gelegt, sondern die Buden und Verkaufsstände werden bis an die Poller herangestellt und die belassenen Wege sind auf der anderen Seite angeordnet.

Hierbei besteht die Möglichkeit, daß auf der Montageplatte mindestens eine Steckdose und/oder mindestens eine Sicherung und/oder mindestens ein Schalter und/oder Zugentlastungsschellen und/oder Klemmen und/oder Elektrizitätsverbrauchsmeßgeräte montiert sind. Es besteht aber auch die Möglichkeit, hier auf der Montageplatte noch weitere Gegenstände zu installieren.

Besonders zweckmäßig ist es, wenn zwei Türen und/oder Klappen vorgesehen sind, hinter denen sich unterschiedliche Bauteile auf der bzw. den Montageplatten befinden, wobei es vorteilhaft ist, wenn die Tür bzw. Klappe mit einem Schloß versehen ist.

Durch diese Ausgestaltung wird die Möglichkeit geschaffen, die eine Tür und/oder Klappe so anzuordnen, daß hinter ihre beispielsweise die Steckdosen und evtl. die Sicherungen angeordnet sind, während hinter der anderen Tür bzw. Klappe Installationsgegenstände angeordnet sind, die allein dem Versorgungsunternehmen zugänglich sein sollen. In diesem Falle wird der Schlüssel für die eine Tür dem Energieabnehmer übergeben, der dann nach seinem Feierabend die Möglichkeit hat, die Stecker aus den Steckdosen herauszunehmen und sie samt den Kabeln in seinem Verkaufsstand einzuschließen, während das Versorgungsunternehmen den Schlüssel für die andere Tür bzw. Klappe behält, so daß kein Abnehmer an die Installationsgegenstände herankommen kann, zu denen das Versorgungsunternehmen dem Abnehmer keinen Zutritt gewähren möchte.

Vorteilhaft ist es, wenn zumindest in der einen Tür oder Klappe, oder einem Rohrwandungsteil, an den diese angrenzen, vorzugsweise am Rand, ein Schlitz, ein Loch oder eine Ausnehmung von mindestens der Größe des Kabeldurchmessers vorgesehen ist. Hierdurch wird es möglich, die Stecker in den Steckdosen vor fremdem Zugriff gesichert zu halten und die von den Steckern wegführenden Kabel trotzdem aus dem Versorgungsschrank herauszuführen.

Als besonders vorteilhaft hat es sich erwiesen, wenn der Schlitz durch ein zurück- oder vorspringendes Wandungsteil des Rohres, einer Tür oder einer Klappe, gebildet ist. Dieses gibt nicht nur ästhetisch eine schön aussehende Gestaltung des Pollers, sondern ergibt auch eine baulich leicht herstellbare Lösung.

Zweckmäßig kann es sein, wenn das Rohr des Pollers durch eine abnehmbare Haube verschlossen ist. Diese Ausführung hat nicht nur den Vorteil einer vereinfachten Herstellung - die Poller können in diesem Falle aus stark wandigem Blech hergestellt werden, das an der Stirnseite durch eine Kappe oder Haube verschlossen wird - sondern auch den Vorteil, daß hierdurch variable Lösungen erzielt werden:
Es ist nämlich möglich, daß das Ende durch einen eingesetzten Masten verschlossen ist. Dieser Mast kann entweder als Lichtmast dienen, indem er eine Leuchte trägt, er kann auch als Verteilermast dienen, indem er an seinem oberen Ende Isolatoren für die Befestigung stromführender Drähte trägt.

Dabei kann es für die leichte Montage eines derartigen Masten zweckmäßig sein, wenn das untere Ende des Mastes mit einem Stecker versehen ist, der in eine Steckdose am oberen Ende der Montageplatte eingreift.

Das Wesen der Erfindung ist nachstehend anhand von in der Zeichnung schematisch dargestellten Ausführungsbeispielen näher erläutert. Es zeigen:
- Fig. 1: eine Ansicht eines Pollers mit abgenommener Verschlußklappe,
- Fig. 2: teilweise im Schnitt, eine Seitenansicht dieses Pollers,
- Fig. 3: einen anderen Poller nach Entfernung der Klappen in Ansicht,
- Fig. 4: teilweise im Schnitt, eine Seitenansicht dieses Pollers,
- Fig. 5: einen durch einen Masten zu einer Laterne umgestalteten Poller,
- Fig. 6: einen Poller mit Verteilungsmasten

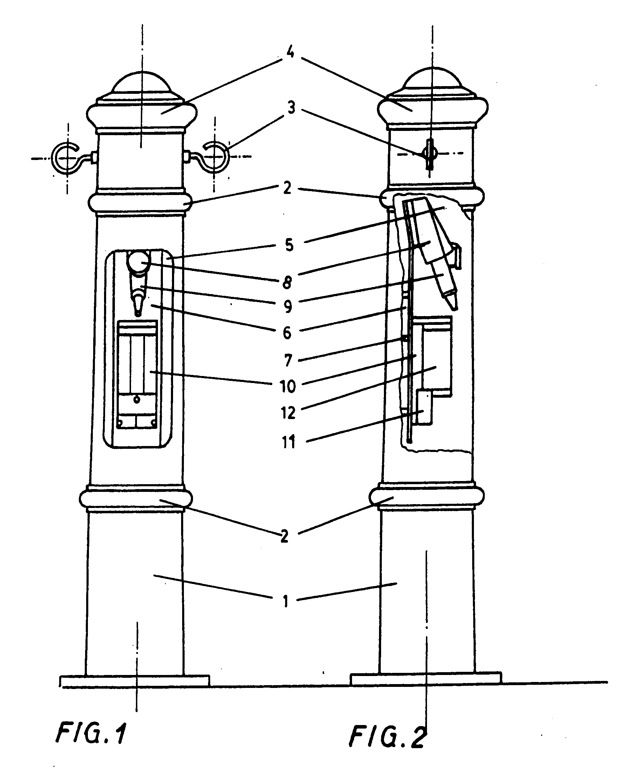

Der Poller der Fig. 1 und 2 ist aus einem leicht konisch zulaufenden Rohr 1 hergestellt, welches mit Zierringen 2 und Haken 3 für das Einhängen von Absperrketten versehen ist. Nach oben hin ist das Rohr 1 durch eine aufgesetzte und befestigte Haube 4 verschlossen. Das Rohr 1 ist mit einer durch eine nicht dargestellte, abgenommene Klappe verschließbare Öffnung versehen. Diese Öffnung gibt Zutritt zu den elektrischen Installationsgegenständen, die auf einer im Inneren des Rohres 1 angeordneten Montageplatte 6 angeordnet sind. Die Montageplatte 6 ist mittels Halterungen 7 an der inneren Wandung des Rohres 1 befestigt. Auf der Montageplatte 6 ist eine Drehstrom-Steckdose 8, in die der Stecker 9 eines nicht dargestellten Kabels eingesteckt ist, montiert. Weiter ist auf dieser Montageplatte eine Zählerplatte 10 sowie eine Zeitschaltuhr 11 montiert, auf der Zählerplatte 10 ist der Elektrozähler 12 montiert.

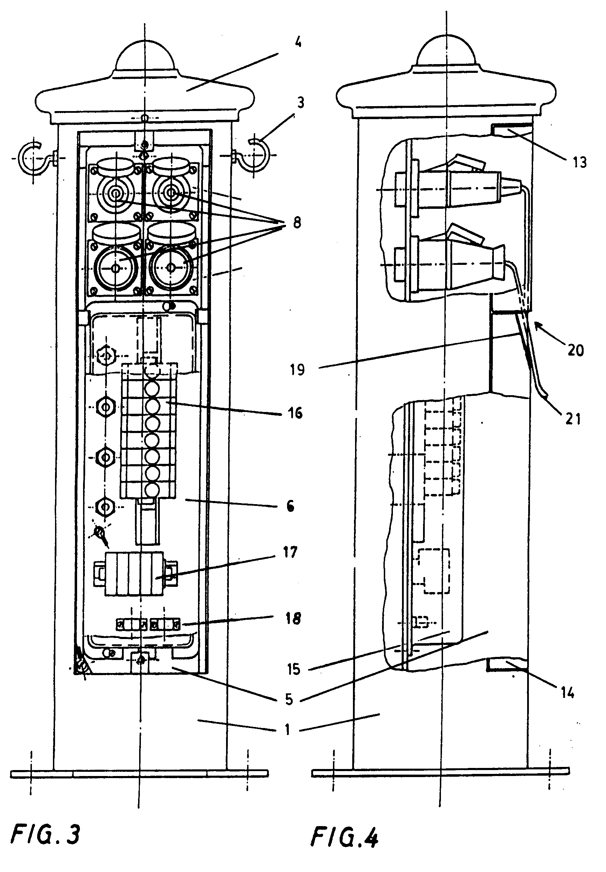

Im Ausführungsbeispiel der Fig. 3 und 4 ist ein anderer Poller dargestellt, welcher ebenfalls aus einem Rohr 1 besteht, an welchem Haken 3 angebracht sind und das durch eine Haube 4 verschlossen ist. Auch hier weist das Rohr eine Öffnung 5 auf, die durch zwei abschließbare Klappen 13, 14 verschlossen ist. Auf der metallischen Montageplatte 6 ist eine Isolierstoffabdeckung 15 angeordnet, auf der Sicherungen 16,Eingangsklemmen 17 und Zugentlastungsschellen 18 montiert sind. Auf der Montageplatte 6 sind hier ebenfalls Steckdosen 8, und zwar unterschiedlicher Bauart für Dreh- und Wechselstrom angebracht.

Bei dieser Ausführungsform weist die untere Klappe einen nach innen eingezogenen oberen Rand 19 auf, so daß zwischen der Unterkante der oberen Klappe 13 und der Oberkante der unteren Klappe 14 ein Schlitz 20 gebildet ist, durch den Kabel 21 aus dem Poller herausgeführt werden können, obwohl beide Klappen 13, 14 fest verschlossen sind. Durch diesen Schlitz 20 kann aber Regen und Schnee nicht in das Innere des Pollers eintreten, weil der Schlitz nur nach unten hin offen ist.

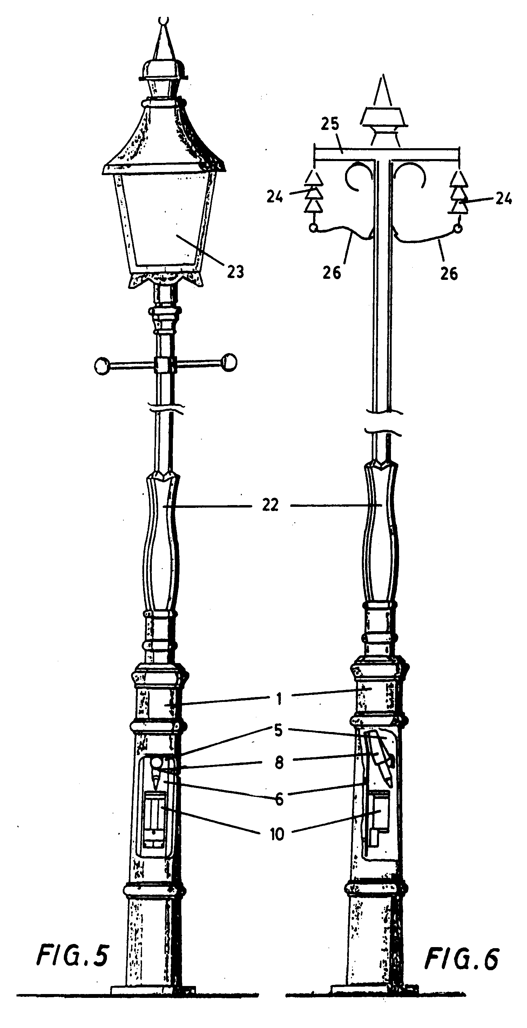

Im Ausführungsbeispiel der Fig. 5 ist die Kappe 4 von dem Rohr 1 abgenommen und anstelle der Haube 4 ist ein Mast 22 von oben her in den oberen Teil des Pollers eingesetzt. Dieser Mast 22 trägt an seinem oberen Ende eine Leuchte 23. Zweckmäßigerweise ist der Mast so eingesetzt, daß er auch wieder demontierbar ist. Auf diese Weise wird eine Möglichkeit geschaffen, im Bedarfsfalle Laternen aufzustellen, die, wenn sie nach Beendigung einer Veranstaltung nicht mehr benötigt werden, auch wieder entfernt werden können.

Im Ausführungsbeispiel der Fig. 6 trägt der Mast 22 elektrische Isolatoren 24 an einem Tragarm 25, an denen elektrische Drähte einer elektrischen Freileitung befestigt werden können. Zu diesen führen Kabel 26, die im Inneren des Rohres 1 des Pollers über elektrische Installationen mit der Versorgungsleitung verbunden werden. Auch dieser Mast kann, wenn er nicht benötigt wird, wieder entfernt werden und das Rohr 1 des Pollers kann durch eine Haube 4 verschlossen werden.

Ebenso gut wie für Versorgung mit Kraftstrom läßt sich der erfindungsgemäße Poller auch für die Versorgung mit Telefonanschlüssen verwenden.

## Patentansprüche

1. Verwendung eines Pollers als Schalt- und Verteilerschrank für die elektrische Energieversorgung, wobei der Poller aus einem hohlen Rohr besteht, welches mindestens an seinem einen Ende verschlossen ist,
wobei die Wandung des Rohres (1) mit mindestens einer Öffnung (5) versehen ist, die durch eine Klappe (13,14)oder Tür verschließbar ist,
wobei im Inneren des Rohres (1) mindestens eine Montageplatte (6) angeordnet ist,
wobei der Poller mindestens eine Öffnung (20) für die Einführung eines Kabels (21) aufweist,
und wobei auf der Montageplatte (6) Elektroinstallationsbauteile montiert sind.

2. Verwendung eines Pollers als Schalt- und Verteilerschrank für die elektrische Energieversorgung nach Anspruch 1,
dadurch gekennzeichnet,
daß auf der Montageplatte (6) mindestens eine Steckdose und/oder mindestens eine Sicherung (16) und/oder mindestens ein Schalter (11) und/oder Zugentlastungsschellen (18) und/oder Klemmen (17) und/oder Elektrizitätsverbrauchsmeßgeräte (12) montiert sind.

3. Verwendung eines Pollers als Schalt- und Verteilerschrank für die elektrische Energieversorgung nach Anspruch 1 und 2,
dadurch gekennzeichnet,
daß zwei Türen und/oder Klappen (13,14) vorgesehen sind, hinter denen sich unterschiedliche Bauteile auf der bzw. den Montageplatten (6) befinden.

4. Verwendung eines Pollers als Schalt- und Verteilerschrank für die elektrische Energieversorgung nach Anspruch 1 bis 3,
dadurch gekennzeichnet,
daß die Tür bzw. Klappe mit einem Schloß versehen ist.

5. Verwendung eines Pollers als Schalt- und Verteilerschrank für die elektrische Energieversorgung nach Anspruch 1 und 2,
dadurch gekennzeichnet,
daß zumindest in der einen Tür oder Klappe (13,14) oder einem Rohrwandungsteil, an den diese Tür oder Klappe (13,14) angrenzt, vorzugsweise am Rand, ein Schlitz (20), ein Loch oder eine Ausnehmung von mindestens der Größe des Kabeldurchmessers vorgesehen ist.

6. Verwendung eines Pollers als Schalt- und Verteilerschrank für die elektrische Energieversorgung nach Anspruch 5,
dadurch gekennzeichnet,
daß der Schlitz (20) durch ein zurück- oder vorspringendes Wandsteil des Rohres (1), einer Tür oder einer Klappe (14) gebildet ist.

7. Verwendung eines Pollers als Schalt- und Verteilerschrank für die elektrische Energieversorgung nach Anspruch 1 ,
dadurch gekennzeichnet,
daß das Rohr (1) des Pollers durch eine abnehmbare Haube verschlossen ist.

8. Verwendung eines Pollers als Schalt- und Verteilerschrank für die elektrische Energieversorgung nach Anspruch 1,
dadurch gekennzeichnet,
daß das Ende des Rohres (1) durch einen eingesetzten Masten (22) verschlossen ist.

9. Verwendung eines Pollers als Schalt- und Verteilerschrank für die elektrische Energieversorgung nach Anspruch 1 und 8,
dadurch gekennzeichnet,
daß das untere Ende des Mastes (22) mit einem Stecker versehen ist, der in eine Steckdose am oberen Ende der Montageplatte (6) eingreift.

## Claims

1. The use of a bollard as switching and distributing box for the supply of electrical energy, wherein the bollard consists of a hollow tubular member which is closed at least at one of its ends, wherein the wall of the tubular member (1) is provided with at least one opening (5) which can be closed by a cover (13, 14) or door, wherein at least one mounting plate (6) is arranged inside the tubular member (1), wherein the bollard comprises at least one opening (20) for the introduction of a cable (21) and wherein electrical installation components are mounted on the mounting plate (6).

2. The use of a bollard as switching and distributing box for the supply of electrical energy as claimed in Claim 1, characterised in that at least one plug socket and/or at least one safety fuse (16) and/or at least one switch (11) and/or strain relief cleats (18) and/or terminals (17) and/or electricity consumption measuring devices (12) are mounted on the mounting plate (6).

3. The use of a bollard as switching and distributing box for the supply of electrical energy as claimed in Claim 1 and 2, characterised in that two doors and/or covers (13, 14) are provided, behind which different components are arranged on the mounting plate(s) (6).

4. The use of a bollard as switching and distributing box for the supply of electrical energy as claimed in Claim 1 to 3, characterised in that the door or cover is provided with a lock.

5. The use of a bollard as switching and distributing box for the supply of electrical energy as claimed in Claim 1 and 2, characterised in that at least in one of the doors or covers (13, 14) or in a wall component of the tubular member adjoined by this door or cover (13, 14), preferably at the edge, there is provided a slot (20), hole or cut-out, the size of which is at least equal to the cable diameter.

6. The use of a bollard as switching and distributing box for the supply of electrical energy as claimed in Claim 5, characterised in that the slot (20) is formed by a recessed or projecting wall component of the tubular member (1), a door or a cover (14).

7. The use of a bollard as switching and distributing box for the supply of electrical energy as claimed in Claim 1, characterised in that the tubular member (1) of the bollard is closed by a removable cap.

8. The use of a bollard as switching and distributing box for the supply of electrical energy as claimed in Claim 1, characterised in that the end of the tubular member (1) is closed by an inserted pole (22).

9. The use of a bollard as switching and distributing box for the supply of electrical energy as claimed in Claim 1 and 8, characterised in that the lower end of the pole (22) is provided with a plug which engages into a plug socket at the upper end of the mounting plate (6).

## Revendications

1. Utilisation d'un bollard comme une armoire de commande et de distribution pour l'alimentation en courant électrique, le bollard se composant d'un tube creux qui est fermé au moins à une de ses extrémités, la paroi du tube (1) étant pourvue d'au moins une ouverture (5) qui peut être fermée par un clapet (13, 14) ou une porte, et il est prévu à l'intérieur du tube (1) au moins une plaque de montage (6), le bollard comportant au moins une ouverture (20) pour l'introduction d'un câble (21) et des composants d'installation électrique étant montés sur la plaque de montage (6).

2. Utilisation d'un bollard comme une armoire de commande et de distribution pour l'alimentation en courant électrique selon la revendication 1, caractérisée en ce que sur la plaque de montage (6) sont montés au moins une prise de courant et/ou au moins un fusible (16) et/ou au moins un contacteur (11) et/ou des colliers de décharge de traction (18) et/ou des bords (17) et/ou des appareils (12) de consommation d'électricité.

3. Utilisation d'un bollard comme une armoire de commande et de distribution pour l'alimentation en courant électrique selon les revendications 1 et 2, caractérisée en ce qu'il est prévu deux portes et/ou clapets (13, 14) en arrière desquels sont disposés des composants différents sur la ou les plaques de montage (6).

4. Utilisation d'un bollard comme une armoire de commande et de distribution pour l'alimentation en courant électrique selon une des revendications 1 à 3, caractérisée en ce que la porte ou clapet est pourvu d'une serrure.

5. Utilisation d'un bollard comme une armoire de commande et de distribution pour l'alimentation en courant électrique selon les revendications 1 et 2, caractérisée en ce qu'il est prévu, au moins dans une des portes ou clapets (13, 14) ou bien dans une partie de paroi du tube à laquelle est adjacente cette porte ou clapet (13, 14), et de préférence sur le bord, une fente (20), un trou ou un évidement ayant au moins la grandeur du diamètre de câble.

6. Utilisation d'un bollard comme une armoire de commande et de distribution pour l'alimentation en courant électrique selon la revendication 5, caractérisée en ce que la fente (20) est créée par une partie de paroi, faisant saillie vers l'arrière ou vers l'avant, du tube (1), d'une porte ou d'un clapet (14).

7. Utilisation d'un bollard comme une armoire de commande et de distribution pour l'alimentation en courant électrique selon la revendication 1, caractérisée en ce que le tube (1) du bollard est fermé par un capot amovible.

8. Utilisation d'un bollard comme une armoire de commande et de distribution pour l'alimentation en courant électrique selon la revendication 1, caractérisée en ce que l'extrémité du tube (1) est fermée par un poteau (22) emmanché.

9. Utilisation d'un bollard comme une armoire de commande et de distribution pour l'alimentation en courant électrique selon les revendications 1 et 8, caractérisée en ce que l'extrémité inférieure du poteau (22) est pourvue d'une fiche qui est engagée dans une prise de courant prévue à l'extrémité supérieure de la plaque de montage (6).
